# EUROPÄISCHE PATENTSCHRIFT

(11) **EP 2 526 009 B1**
(45) Veröffentlichungstag und Bekanntmachung des Hinweises auf die Patenterteilung: **04.05.2016**
(21) Anmeldenummer: 10808981.4
(22) Anmeldetag: 21.12.2010
(51) Int. Cl.: B62J 9/00

(54) **VERRIEGELUNGSSYSTEM**
LOCKING SYSTEM
SYSTÈME DE VERROUILLAGE

(30) Priorität: 20.01.2010 DE 102010005272
(43) Veröffentlichungstag der Anmeldung: 28.11.2012
(73) Patentinhaber: Schanz, Jochen, 78078 Niedereschach (DE); Schwarz, Herbert, 78078 Niedereschach (DE)
(72) Erfinder: Schanz, Jochen, 78078 Niedereschach (DE); Schwarz, Herbert, 78078 Niedereschach (DE)
(74) Vertreter: Zimmermann, Günter
(86) Internationale Anmeldenummer: PCT/DE2010/001497
(87) Internationale Veröffentlichungsnummer: WO 2011/088814

(56) Entgegenhaltungen:
- EP-A2- 0 876 951
- WO-A1-01/02238
- WO-A1-2007/045371
- DE-A1- 4 230 972

## Beschreibung

Die Erfindung bezieht sich auf ein Verriegelungssystem mit den Merkmalen des Oberbegriffs des Anspruchs 1.

Ein derartiges Verriegelungssystem ist durch die WO 01/02238 A1 bekannt.

Ein weiteres Verriegelungssystem ist durch das Gebrauchsmuster DE 84 24 404 U1 bekannt. Dieses Verriegelungssystem ist als ein abschließbarer Hakenhebelverschluss ausgebildet und an einem Motorradkoffer angeordnet. Zum Befestigen des Koffers an dem Halterahmen des Motorrads wird der Koffer zuerst auf einen unteren horizontalen Schenkel des Halterahmens aufgesetzt. Anschließend wird ein Hakenhebel an dem oberen horizontalen Schenkel des Halterahmens angebracht und durch Verschwenken des Hakenhebels wird der Koffer an dem Halterahmen fixiert. In der zurückgeschwenkten Schließstellung befindet sich der Hakenhebel in einer Totlage und kann sich nicht selbstständig in die Offenstellung zurückbewegen. Nun wird der Hakenhebelverschluss durch ein Schloss gegen unbefugtes Öffnen gesichert. Zum Anbringen des Koffers mit dem bekannten Verriegelungssystem an den Halterahmen sind nachteiligerweise beide Hände des Fahrers erforderlich, da mit einer Hand der Koffer gehalten und mit der anderen Hand der Hakenhebelverschluss betätigt wird.

Weitere Verriegelungssysteme sind durch die EP 0876951 A2, die WO 2007/045371 A1 und die DE 4230972 A1 bekannt.

Die Aufgabe der Erfindung wird somit darin gesehen, das Verriegelungssystem der eingangs genannten Art derart weiterzuentwickeln, dass der Koffer nur mit einer Hand an dem Halterahmen befestigt werden kann und zuverlässig gesichert ist.

Zur Lösung dieser Aufgabe wird erfindungsgemäß vorgeschlagen, dass das Verriegelungssystem gemäß dem Oberbegriff des Anspruchs 1 entsprechend dem kennzeichnenden Teil dieses Anspruchs ausgebildet ist.

Bei dem erfindungsgemäßen Verriegelungssystem wird der Verschlusskörper im Grundzustand durch die Feder immer in der Offenstellung gehalten. Soll nun ein mit dem Verriegelungssystem ausgestatteter Koffer an dem Halterahmen befestigt werden, dann wird der Koffer mit einer Hand gehalten und zuerst auf eine untere Querstrebe des Halterahmens aufgesetzt. Anschließend wird der Koffer in Richtung einer oberen Querstrebe des Halterahmens gedrückt, wobei der in Offenstellung gehaltene Verschlusskörper in Eingriff mit dem Halterahmen kommt. Nun wird der Koffer mit dem Verriegelungssystem weiter in Richtung des Halterahmens gedrückt, so dass der Verschlusskörper weiter verschwenkt und das an dem Verschlusskörper anliegende federbeaufschlagte Riegelelement, welches den Verschlusskörper bisher in Offenstellung freigegeben hat, nun in Schließstellung durch die Kraft der Feder gelangt und den Verschlusskörper verriegelt. Der Verschlusskörper kann nun nicht mehr in eine Offenstellung zurückgeschwenkt werden und somit ist der Koffer an dem Halterahmen gesichert. Der gesamte Vorgang des Aufhängens des Koffers an dem Halterahmen kann mit einer Hand ausgeführt werden. Soll der Koffer wieder von dem Halterahmen entfernt werden, dann wird durch Betätigen der Entriegelungseinheit das Riegelelement entgegen der Federkraft zurückgezogen und gibt den Verschlusskörper frei, so dass ein Verschwenken des Verschlusskörpers in seine Offenstellung wieder ermöglicht wird.

Halterahmen für einen Motorradkoffer können unterschiedlich ausgebildet sein. Die Aufnahme des Verschlusskörpers ist an die entsprechende Form des Halterahmens angepasst. Da die Halterahmen meist rohrförmig ausgebildet sind, ist die Aufnahme des Verschlusskörpers halbrohrförmig ausgebildet. Beim Anbringen des Koffers an den Halterahmen greift dann die entsprechende rohrförmig ausgebildete Querstrebe des Halterahmens formschlüssig in die halbrohrförmige Aufnahme des Verschlusskörpers ein, so dass über die gesamte Länge des Verschlusskörpers ein sicherer Halt gewährleistet ist.

Eine Ausführungsform der Erfindung sieht vor, dass die Entriegelungseinheit entfernt von dem Grundkörper angeordnet ist und durch Betätigen der Entriegelungseinheit ein Seilzug das Riegelelement außer Eingriff mit dem Verschlusskörper bringt. Die Entriegelung kann somit von einer frei zugänglichen Seite des Koffers erfolgen. innerhalb des Grundkörpers kann auch ein Betätigungsgriff an dem Zughebel angeordnet sein, um die Entriegelung vom Innern des Koffers aus vorzunehmen.

Auf den am Halterahmen angebrachten Koffer wirken insbesondere beim Offroadfahren erhebliche Kräfte. Entsprechend muss das Verriegelungssystem sehr stabil und massiv ausgebildet sein. Eine Ausführungsform der Erfindung sieht deshalb vor, dass der Verschlusskörper eine mit dem Riegelelement zusammenwirkende Schließplatte aufweist. Vorteilhafterweise ist auch das Riegelelement plattenförmig ausgebildet und weist einen abgebogenen Endbereich auf, auf welchem die Schließplatte in Offenstellung des Verschlusskörpers anliegt. Bei dem Verriegelungssystem sind somit keine dünnen Stege oder dergleichen vorgesehen, welche bei starker Belastung brechen könnten, sondern insgesamt sind die für die Verriegelung zuständigen Elemente aufgrund ihrer plattenförmigen Ausbildung sehr stabil und massiv. Damit auch die Verriegelung zuverlässig ausgeführt wird, sieht eine weitere Ausgestaltung der Erfindung vor, dass an dem abgebogenen Endbereich des Riegelelementes mindestens eine Druckfeder anliegt. Üblicherweise werden zwei Druckfedern verwendet, so dass auch beim Ausfall einer Druckfeder das Verriegelungssystem immer noch wirksam ist.

Wir vorstehend erwähnt, sind die Einzelteile des Verriegelungssystems stabil und massiv ausgebildet. Entsprechend müssen auch bei der Entriegelung entsprechend große Kräfte aufgebracht werden, um die Teile zu bewegen. Eine Weiterbildung der Erfindung sieht deshalb vor, dass die Entriegelungseinheit einen Drehhebel aufweist, welcher mit dem Seilzug verbunden ist. Durch den Drehhebel können mit geringem Kraftaufwand für den Fahrer große Kräfte umgesetzt werden. Entsprechend muss auch der Entriegelungsmechanismus innerhalb des Grundkörpers mit Drehkräften arbeiten. Vorteilhafterweise sitzt deshalb der Zughebel auf einer Achse mit einem Exzenterhebel, welcher bei Betätigen des Zughebels das Riegelelement entriegelt. Um die Entriegelungseinheit gegen unbefugtes Öffnen zu sicher, ist diese zweckmäßigerweise abschließbar.

Der Grundkörper des Verriegelungssystems kann in eine Seitenwand des Koffers eingearbeitet sein, so dass in Schließstellung und bei geschlossenem Koffer diese Seitenwand für den Fahrer nur schwer zugänglich oder sogar nicht mehr zugänglich ist. Entsprechend sieht eine weitere Ausführungsform der Erfindung vor, dass der Grundkörper an einer Seitenwand des Koffers und die Entriegelungseinheit an einer anderen Wand des Koffers angeordnet sind. Somit kann das Verriegelungssystem von einer für den Fahrer leicht zugänglichen Seite des Koffers betätigt werden.

Die Erfindung wird nachstehend anhand der Zeichnung näher erläutert. Die Zeichnung zeigt ein Ausführungsbeispiel der Erfindung. Hierbei stellen dar:

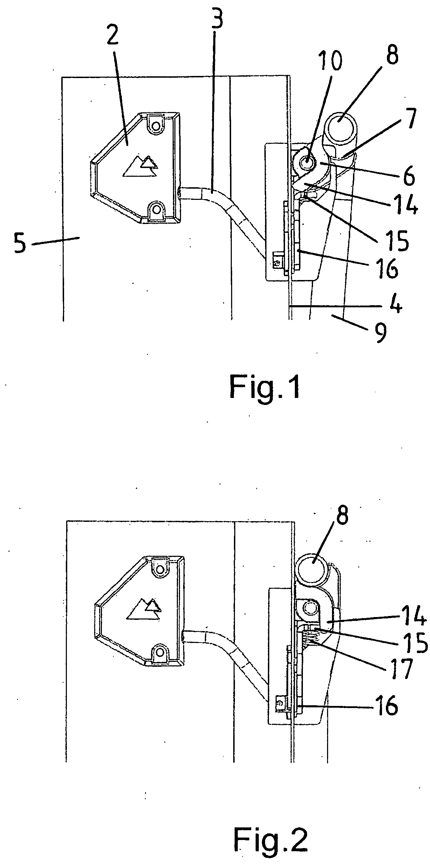

Fig. 1: einen Querschnitt in Offenstellung,
Fig. 2: einen Querschnitt in Schließstellung,

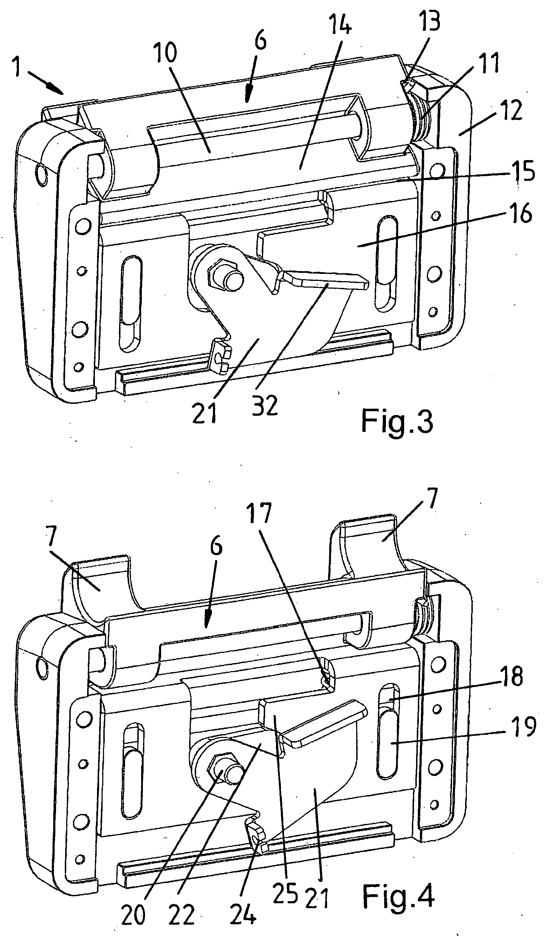

Fig. 3: eine perspektivische Ansicht des Grundkörpers in Offenstellung,
Fig. 4: eine perspektivische Ansicht des Grundkörpers in Schließstellung,

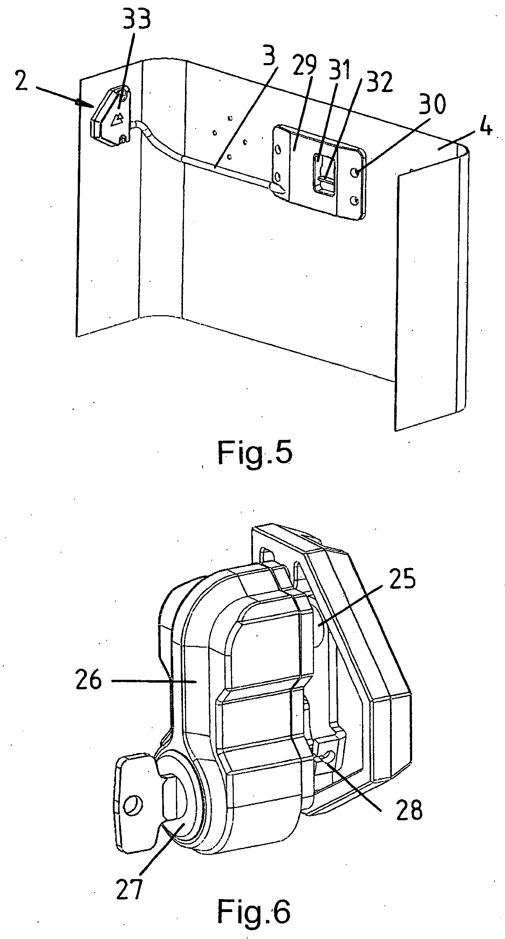

Fig. 5: eine perspektivische Ansicht der Anordnung des Verriegelungssystems an einem Koffer und
Fig. 6: eine perspektivische Ansicht der Entriegelungseinheit.

Das Verriegelungssystem weist einen Grundkörper 1 und eine Entriegelungseinheit 2 auf, welche über einen Seilzug 3, üblicherweise ein Bowdenzug, miteinander verbunden sind. Der Grundkörper 1 ist an einer Seitenwand 4 eines Koffers angeordnet, während de Entriegelungseinheit 2 an einer angrenzenden Wand 5 des Koffers angeordnet ist. Der Seilzug 3 verläuft im Innern des Koffers entlang der Innenseiten der Seitenwand 4 und der angrenzenden Wand 5. Der Grundkörper 1 weist einen in eine Offenstellung und eine Schließstellung verschwenkbaren Verschlusskörper 6 mit einer Aufnahme 7 für einen Halterahmen 8 auf. Bei dem Halterahmen 8 handelt es sich um eine obere rohrförmig ausgebildete Querstrebe eines Motorradgepäckträgers 9. Der Verschlusskörper 6 ist auf einer Achse 10 verschwenkbar gelagert, welche im oberen, dem Halterahmen 8 zugewandten Bereich des Grundkörpers 1 angeordnet ist. Der Verschlusskörper 6 wird unter der Wirkung einer Feder 11, üblicherweise eine Schenkelfeder, in seiner Offenstellung gehalten. Die Feder 11 ist ebenfalls auf der Achse 10 gelagert und befindet sich zwischen einer Seitenwand 12 des Grundkörpers 1 und dem Verschlusskörper 6. Ein Schenkel der Feder 11 stützt sich an der Innenseite der Seitenwand 12 und der andere Schenkel der Feder 11 stützt sich an einer Aussparung 13 des Verschlusskörpers 6 ab. Die Aufnahme 7 für den Halterahmen 8 ist an den beiden Endbereichen des Verschlusskörpers 6 halbrohrförmig ausgebildet. Der Verschlusskörper 6 weist eine massiv ausgebildete Schließplatte 14 auf, welche mit ihrem freien Ende in Offenstellung auf der Oberseite eines abgebogenen Endbereichs 15 eines Riegelelementes 16 anliegt. Das Riegelelement 16 steht unter der Wirkung von zwei Druckfedern 17, welche sich mit einem Ende an der Innenseite einer Bodenseite des Grundkörpers 1 abstützen und mit dem anderen Ende sich an der Unterseite des abgebogenen Endbereichs 15 des Riegelelementes 16 abstützen. Das Riegelelement 16 ist von dem abgebogenen Endbereich 15 abgesehen plattenförmig ausgebildet und weist zwei Schlitze 18 auf. In jeden Schlitz 18 ragt ein Führungssteg 19 des Grundkörpers 1 hinein. Entlang der Führungsstege 19 wird das Riegelelement 16 bei Bewegung von der Offenstellung in die Schließstellung geführt. In dem Grundkörper 1 ist weiterhin eine Achse 20 vorgesehen, auf welcher ein Zughebel 21 und ein Exzenterhebel 22 angeordnet sind. Der Exzenterhebel 22 steht in Eingriff mit einer Nase 23 des Riegelelementes 16. Der Zughebel 21 weist einen Ansatz 24 zum Befestigen eines Endes des Seilzugs 3 auf. Die Entriegelungseinheit 2 weist einen um eine Achse 25 schwenkbaren Drehhebel 26 auf. Der Drehhebel ist über ein Schloss 27 abschließbar, so dass er nicht mehr verschwenkt werden kann. Mit dem Drehhebel 26 ist ein Ansatz 28 verbunden, an welchem der Seilzug 3 mit seinem anderen Ende befestigt ist. Zum Kofferinneren hin ist der Grundkörper 1 mit einer Abdeckung 29 abgedeckt, welche über Befestigungsmittel 30 den Grundkörper 1 an der Außenseite der Seitenwand 4 fixiert. Durch eine Öffnung 31 in der Abdeckung 29 ist ein Betätigungsgriff 32 an dem Zughebel 21 erreichbar. Damit kann die Entriegelung auch vom Innern des Koffers her erfolgen. Eine weitere Abdeckung 33 an der Innenseite der Wand 5 ist ebenfalls für die Entriegelungseinheit 2 vorgesehen.

Soll nun ein mit dem erfindungsgemäßen Verriegelungssystem ausgestatteter Koffer an einem Halterahmen eines Motorradgepäckträgers befestigt werden, dann wird der Koffer mit einer Hand gehalten und zuerst auf eine in der Zeichnung nicht dargestellte untere Querstrebe des Halterahmens aufgesetzt. Anschließend wird der Koffer gegen die obere Querstrebe des Halterahmens 8 gedrückt, wobei der Halterahmen 8 automatisch in die Aufnahme 7 des Verschlusskörpers 6 eingreift, da sich der Verschlusskörper 6 unter Wirkung der Feder 11 immer im Grundzustand in Offenstellung befindet. Kommt nun der Halterahmen 8 in Kontakt mit der Aufnahme 7 und wird der Koffer weiter in Richtung des Halterahmens 8 gedrückt, dann bewirkt dieser Druck, dass der Verschlusskörper 6 sich entgegen der Kraft der Feder 11 um die Achse 10 verschwenkt. Dabei gleitet die Schließplatte 14 entlang der Oberseite des Riegelelementes 16. Wenn der Halterahmen 8 die Außenwand des Koffers erreicht und sich damit in Schließstellung befindet, dann gibt die Schließplatte 14 das Riegelelement 16 frei und das Riegelelement 16 wird durch die Kraft der Federn 17 nach oben gedrückt und verriegelt damit die Schließplatte 14. Ein Zurückschwenken der Schließplatte 13 ist nun nicht mehr möglich, da das Riegelelement 16 an der Innenseite der Schließplatte 14 anliegt und diese blockiert. Der Koffer ist nun in Schließstellung an dem Halterahmen 8 gesichert. Für die gesamte Schließbewegung ist lediglich eine Hand des Fahrers erforderlich. Um den Koffer zusätzlich an der unteren Querstrebe zu sichern, ist an dem Koffer mindestens ein Haken angebracht, welcher nach Aufsetzen des Koffers auf die untere Querstrebe diese Querstrebe hintergreift oder umgreift. Der Koffer wird durch die Spannung zwischen der oberen Querstrebe und der unteren Querstrebe gehalten, welche durch den in Schließstellung gebrachten Verschlusskörper 6 erzeugt wird, da dieser in Schließstellung gegen die obere Querstrebe drückt und damit den Koffer auf die untere Querstrebe presst. Um den Koffer wieder von dem Halterahmen 8 zu entfernen, wird von dem Fahrer der Drehhebel 26 verschwenkt, wodurch der Seilzug 3 betätigt wird und der Zughebel 21 verschwenkt wird. Mit Verschwenken des Zughebels 21 wird auch der Exzenterhebel 22 verschwenkt und drückt nun das Riegelelement 16 entgegen der Kraft der Druckfedern 17 nach unten, bis die Schließplatte 14 von dem abgebogenen Endbereich 15 wieder frei gegeben wird. Nach Freigabe schnappt der Verschlusskörper 6 durch die Wirkung der Feder 11 in seine Offenstellung, so dass nun der Koffer wieder von dem Halterahmen 8 abgenommen werden kann. Um den Drehhebel 26 gegen unbefugte Benutzung und auch im Fahrbetrieb zu sichern, wird der Drehhebel 26 über das Schloss 27 abgeschlossen.

## Patentansprüche

1. Verriegelungssystem mit einem Halterahmen (8) für einen Koffer und mit einem Grundkörper (1), welcher einen in eine Offenstellung und in eine Schließstellung verschwenkbaren Verschlusskörper (6) mit einer Aufnahme (7) für den Halterahmen (8) mit einer rohrförmig ausgebildeten oberen Querstrebe aufweist, wobei ein federbeaufschlagtes Riegelelement (16) und ein mit dem Riegelelement (16) verbundenes Bedienungselement vorgesehen ist und das Riegelelement (16) in der unter der Wirkung einer Feder (11) stehenden Offenstellung des Verschlusskörpers (6) an diesen anliegt und in der Schließstellung des Verschlusskörpers (6) mit diesem verrastet und durch Betätigen einer Entriegelungseinheit (2) das Riegelelement (16) außer Eingriff mit dem Verschlusskörper (6) kommt, und wobei das Bedienungselement ein Zughebel (21) ist,
**dadurch gekennzeichnet,**
**dass** der Koffer auf einer unteren Querstrebe des Halterahmens (8) aufgesetzt ist und in Schließstellung die rohrförmig ausgebildete obere Querstrebe des Halterahmens (8) formschlüssig in die halbrohrförmige Aufnahme (7) des Verschlusskörpers (6) eingreift, wobei in Offenstellung das offene Teil der Aufnahme (7) des Verschlusskörpers (6) nach oben hin zu der oberen Querstrebe des Halterahmens (8) weist und in Schließstellung nach oben derart gegen die obere Querstrebe drückt, dass der Koffer durch die von dem in Schließstellung gebrachten Verschlusskörper (6) erzeugte Spannung zwischen der oberen Querstrebe und der unteren Querstrebe gehalten ist.

2. Verriegelungssystem nach Anspruch 1,
**dadurch gekennzeichnet,**
**dass** die Entriegelungseinheit (2) entfernt von dem Grundkörper angeordnet ist und durch Betätigen der Entriegelungseinheit (2) ein Seilzug (3) das Riegelelement (16) außer Eingriff mit dem Verschlusskörper (6) bringt.

3. Verriegelungssystem nach Anspruch 1 oder 2,
**dadurch gekennzeichnet,**
**dass** der Verschlusskörper (6) eine mit dem Riegelelement (16) zusammenwirkende Schließplatte (14) aufweist.

4. Verriegelungssystem nach Anspruch 3,
**dadurch gekennzeichnet,**
**dass** das Riegelelement (16) plattenförmig ausgebildet ist und einen abgebogenen Endbereich (15) aufweist, auf welchem die Schließplatte (14) in Offenstellung des Verschlusskörpers (6) anliegt.

5. Verriegelungssystem nach Anspruch 4,
**dadurch gekennzeichnet,**
**dass** an dem abgebogenen Endbereich (15) des Riegelelementes (16) mindestens eine Druckfeder (17) anliegt.

6. Verriegelungssystem nach einem der vorhergehenden Ansprüche,
**dadurch gekennzeichnet,**
**dass** die Entriegelungseinheit (2) einen Drehhebel (26) aufweist, welcher mit dem Seilzug (3) verbunden ist.

7. Verriegelungssystem nach einem der vorhergehenden Ansprüche,
**dadurch gekennzeichnet,**
**dass** der Zughebel (21) auf einer Achse (20) mit einem Exzenterhebel (22) sitzt, welcher bei Betätigen des Zughebels (21) das Riegelelement (16) entriegelt.

8. Verriegelungssystem nach einem der vorhergehenden Ansprüche,
**dadurch gekennzeichnet,**
**dass** die Entriegelungseinheit (2) abschließbar ist.

9. Verriegelungssystem nach einem der vorhergehenden Ansprüche,
**dadurch gekennzeichnet,**
**dass** der Grundkörper (1) an einer Seitenwand (4) des Koffers und die Entriegelungseinheit (2) an einer anderen Wand (5) des Koffers angeordnet sind.

## Claims

1. Locking system with a retaining frame (8) for a carrying case, and with a main body (1) which comprises a closure body (6) which can be pivoted into an open position and a closed position and has a receptacle (7) for the retaining frame (8) with a tubular upper transverse strut, wherein a springloaded latch element (16) is provided together with a control element connected to the latch element, and the latch element (16) lies against the closure body (6) in the open position thereof under the effect of a spring (11) and engages with the closure body (6) in the closed position thereof, and the latch element (16) is disengaged from the closure body (6) by activation of an unlocking unit (2), and wherein the control element is a pulling lever (21), **characterized in that**
the carrying case is placed on a lower transverse strut of the retaining frame (8) and in the closed position the tubular upper transverse strut of the retaining frame (8) engages by form fit in the semi-tubular receptacle (7) of the closure body (6), wherein in the open position the open part of the receptacle (7) of the closure body (6) faces upward towards the upper transverse strut of the retaining frame (8), and in the closed position presses upward against the upper transverse strut such that the carrying case is retained by the tension between the upper transverse strut and the lower transverse strut generated by the closure body (6) brought into the closed position.

2. Locking system according to claim 1, **characterized in that** the unlocking unit (2) is arranged remotely from the main body and on activation of the unlocking unit (2) a Bowden cable (3) disengages the latch element (16) from the closure body (6).

3. Locking system according to claim 1 or 2, **characterized in that** the closure body (6) comprises a closing plate (14) cooperating with the latch element (16).

4. Locking system according to claim 3, **characterized in that** the latch element (16) is formed plate-like and has a bent end region (15) on which the closing plate (14) lies in the open position of the closure body (6).

5. Locking system according to claim 4, **characterized in that** at least one compression spring (17) lies on the bent end region (15) of the latch element (16).

6. Locking system according to any of the preceding claims, **characterized in that** the unlocking unit (2) has a rotary lever (26) which is connected to the Bowden cable (3).

7. Locking system according to any of the preceding claims, **characterized in that** the pulling lever (21) sits on a shaft (20) with a cam lever (22) which releases the latch element (16) on activation of the pulling lever (21).

8. Locking system according to any of the preceding claims, **characterized in that** the unlocking unit (2) can be locked.

9. Locking system according to any of the preceding claims, **characterized in that** the main body (1) is arranged on a side wall (4) of the carrying case and the unlocking unit (2) is arranged on another wall (5) of the carrying case.

## Revendications

1. Système de verrouillage comportant un cadre de maintien (8) pour une valise et un corps de base (1), lequel présente un corps de fermeture (6) pouvant pivoter dans une position d'ouverture et dans une position de fermeture, avec un logement (7) pour le cadre de maintien (8) doté d'une entretoise transversale supérieure réalisée en forme de tube, dans lequel un élément de verrouillage (16) sollicité par un ressort et un élément de commande relié à l'élément de verrouillage (16) sont prévus et l'élément de verrouillage (16), dans la position d'ouverture du corps de fermeture (6) soumise à l'effet d'un ressort (11), repose contre celui-ci et, dans la position de fermeture du corps de fermeture (6), s'encliquette avec celui-ci et l'élément de verrouillage (16) est dégagé du corps de fermeture (6) par l'actionnement d'une unité de déverrouillage (2), l'élément de commande étant un levier de traction (21),
**caractérisé en ce**
**que** la valise est posée sur une entretoise transversale inférieure du cadre de maintien (8) et, en position de fermeture, l'entretoise transversale supérieure réalisée en forme de tube du cadre de maintien (8) s'engage par complémentarité de formes dans le logement semi-tubulaire (7) du corps de fermeture (6), en position d'ouverture la partie ouverte du logement (7) du corps de fermeture (6) étant dirigée vers le haut en direction de l'entretoise transversale supérieure du cadre de maintien (8), et, en position de fermeture, pressant vers le haut contre l'entretoise transversale supérieure de telle façon que la valise soit maintenue entre l'entretoise transversale supérieure et l'entretoise transversale inférieure par la tension produite par le corps de fermeture (6) amené en position de fermeture.

2. Système de verrouillage selon la revendication 1,
**caractérisé en ce**
**que** l'unité de déverrouillage (2) est disposée à distance du corps de base et que, par actionnement de l'unité de déverrouillage (2), un câble de commande (3) dégage l'élément de verrouillage (16) du corps de fermeture (6).

3. Système de verrouillage selon la revendication 1 ou la revendication 2,
**caractérisé en ce**
**que** le corps de fermeture (6) présente une plaque de fermeture (14) qui coopère avec l'élément de verrouillage (16).

4. Système de verrouillage selon la revendication 3,
**caractérisé en ce**
**que** l'élément de verrouillage (16) est réalisé en forme de plaque et présente une zone terminale recourbée (15) contre laquelle est appliquée la plaque de fermeture (14) dans la position d'ouverture du corps de fermeture (6).

5. Système de verrouillage selon la revendication 4,
**caractérisé en ce**
**qu'**au moins un ressort de compression (17) est appliqué contre la zone terminale recourbée (15) de l'élément de verrouillage (16).

6. Système de verrouillage selon l'une des revendications précédentes,
**caractérisé en ce**
**que** l'unité de déverrouillage (2) présente un levier rotatif (26) qui est relié au câble de commande (3).

7. Système de verrouillage selon l'une des revendications précédentes,
**caractérisé en ce**
**que** le levier de traction (21) est monté sur un axe (20) avec un levier excentrique (22) qui, lorsque le levier de traction (21) est actionné, déverrouille l'élément de verrouillage (16).

8. Système de verrouillage selon l'une des revendications précédentes,
**caractérisé en ce**
**que** l'unité de déverrouillage (2) peut être fermée à clé.

9. Système de verrouillage selon l'une des revendications précédentes,
**caractérisé en ce**
**que** le corps de base (1) est disposé sur une paroi latérale (4) de la valise et l'unité de déverrouillage (2) sur une autre paroi (5) de la valise.
